# EUROPEAN PATENT APPLICATION

(11) **EP 3 832 434 A1**
(43) Date of publication of application: **09.06.2021**
(21) Application number: 19213155.5
(22) Date of filing: 03.12.2019
(51) Int. Cl.: G06F 3/01, G06F 3/0346, G06F 3/0481

(54) **BEHAVIOR-BASED CONFIGURATION METHOD AND BEHAVIOR-BASED CONFIGURATION SYSTEM**

(71) Applicant: XRSpace CO., LTD., Taoyuan City 330 (TW)
(72) Inventor: HUANG, Ching-Ning, 111 Taipei City (TW); LU, Hua-Lun, 114 Taipei City (TW); HSIEH, Yi-Kang, 310 Hsinchu County (TW)
(74) Representative: Becker & Kurig Partnerschaft Patentanwälte PartmbB

(57) **Abstract**

A behavior-based configuration method and a behavior-based configuration system (100, 200) are provided. The processor (150) determines whether a motion sensing apparatus (110) is activated based on first motion sensing data from the motion sensing apparatus (110), analyzes second motion sensing data to determine which human body portion (Bl, B2) is acted with the motion sensing apparatus (110) in response to the motion sensing apparatus (110) being activated, configures a first operating mode for a first human body portion (Bl, B2) acted with the motion sensing apparatus (110) based on the analyzed result of the second motion sensing data in a first time period, and configures a second operating mode for a second human body portion (Bl, B2) acted with the motion sensing apparatus (110) based on the analyzed result in a second time period. Accordingly, it is convenient for the user to use the motion sensing apparatus (110).

## Description

### TECHNICAL FIELD

The present disclosure generally relates to a method for configuration, in particular, to a behavior-based configuration method and a behavior-based configuration system.

### BACKGROUND

To provide intuitive operation on an electronic apparatus (such as a game player, a computer, a smartphone, a smart appliance, etc.), the motion of the user may be detected, to directly operate the electronic apparatus according to the motion of the user.

In conventional approaches, some electronic apparatuses may allow the human body portion (such as a hand, a leg, a head, etc.) of the user to control the operation of these electronic apparatuses. A handheld controller or other wearable motion sensing apparatuses with a motion sensor may be provided for sensing the human body portion of the user. However, these motion sensing apparatuses are designed for a specific human body portion. For example, a handheld controller is designed for the right hand of the user, and another handheld controller is designed for the left hand. This limitation for specific human body portion is not intuitive for the user. The user has to identify which handheld controller is adapted for his/her operating hand first.

### SUMMARY OF THE DISCLOSURE

Accordingly, the present disclosure is directed to a behavior-based configuration method and a behavior-based configuration system, in which the operating mode can be configured based on the behavior of the user.

In one of the exemplary embodiments, a behavior-based configuration method includes, but not limited to, the following steps. Whether a motion sensing apparatus is activated is determined based on first motion sensing data from the motion sensing apparatus. Second motion sensing data is analyzed to determine which human body portion of a user is acted with the motion sensing apparatus in response to the motion sensing apparatus being activated. The second motion sensing data is related to the human body portion acted with the motion sensing apparatus. A first operating mode for a first human body portion acted with the motion sensing apparatus is configured based on the analyzed result of the second motion sensing data in a first time period. A second operating mode for a second human body portion acted with the motion sensing apparatus is configured based on the analyzed result of the second motion sensing data in a first time period.

In one of the exemplary embodiments, a behavior-based configuration system includes, but not limited to, a motion sensing apparatus and a processor. The processor determines whether the motion sensing apparatus is activated based on first motion sensing data from the motion sensing apparatus, analyzes second motion sensing data to determine which human body portion of a user is acted with the motion sensing apparatus in response to the motion sensing apparatus being activated, configure a first operating mode for a first human body portion acted with the motion sensing apparatus based on the analyzed result of the second motion sensing data in a first time period, and configure a second operating mode for a second human body portion acted with the motion sensing apparatus based on the analyzed result of the second motion sensing data in a second time period. The second motion sensing data is related to the human body portion acted with the motion sensing apparatus.

In light of the foregoing, according to the behavior-based configuring method and the behavior-based configuration system provided in one or more embodiments, the motion of the human body portion of the user would be tracked, and the motion of the human body portion would be analyzed to identify which human body portion is acted with the motion sensing apparatus. Then, different operating modes could be configured for different human body portions according to the analyzed result, respectively. Accordingly, a flexible and convenient way to operate an electronic apparatus is provided.

It should be understood, however, that this Summary may not contain all of the aspects and embodiments of the present disclosure, is not meant to be limiting or restrictive in any manner, and that the invention as disclosed herein is and will be understood by those of ordinary skill in the art to encompass obvious improvements and modifications thereto.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a block diagram illustrating a behavior-based configuration system according to one of the exemplary embodiments of the disclosure.
FIG. 2 is a schematic diagram illustrating a behavior-based configuration system according to one of the exemplary embodiments of the disclosure.
FIG. 3 is a flowchart illustrating a behavior-based configuration method according to one of the exemplary embodiments of the disclosure.
FIG. 4 is a schematic diagram illustrating a motion tracking method according to one of the exemplary embodiments of the disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

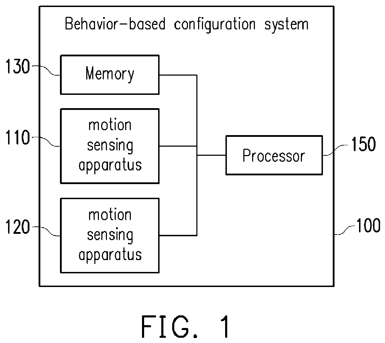

FIG. 1 is a block diagram illustrating a behavior-based configuration system 100 according to one of the exemplary embodiments of the disclosure. Referring to FIG. 1, the behavior-based configuration system 100 includes, but not limited thereto, one or more motion sensing apparatuses 110, memory 130, and processor 150. In one embodiment, the behavior-based configuration system 100 can be adapted for VR, AR, MR, XR or other reality-related technology. In some embodiments, the behavior-based configuration system 100 can be adapted for operating an external apparatus (such as a computer, a game player, a smartphone, an in-dash system, a smart appliance, etc.).

The motion sensing apparatus 110 could be a handheld controller or a wearable apparatus, such as a wearable controller, a smartwatch, an ankle sensor, a waist belt, or the likes. In one embodiment, each motion sensing apparatus 100 is wearable on one human body portion of the user. For example, the human body portion may be left or right hand, a head, left or right ankle, left or right leg, a waist, or other portions.

In one embodiment, the motion sensing apparatus 110 includes a motion sensor. The motion sensor could be an accelerometer, a gyroscope, a magnetometer, a laser sensor, an inertial measurement unit (IMU), an infrared ray (IR) sensor, or any combination of aforementioned motion sensors. The motion sensor is used for sensing the motion itself, and acted with the human body portion in which itself is placed. For example, the motion sensor detects the position in a 3-dimention space and the rotation situation itself. The human body portion of the user may hold, wear, or carry the motion sensing apparatus 110, so that the motion sensor is acted with the human body portion. Therefore, the motion of the motion sensor may represent the motion of the human body portion.

In one embodiment, the behavior-based configuration system 100 may further include one or more motion sensing apparatuses 120. The motion sensing apparatus 120 could be a head-mounted display (HMD), a smartphone, a camera, a laptop, a positioning apparatus, or the likes. In one embodiment, the motion sensing apparatus 120 includes an image sensor. The image sensor may be a camera, such as a monochrome camera or a color camera, a deep camera, a video recorder, or other image sensor capable of capturing images.

In some embodiments, the image sensor may be used to capture toward one or more human body portions of the user, to generate the images including one or more human body portions of the user.

Memory 130 may be any type of a fixed or movable Random-Access Memory (RAM), a Read-Only Memory (ROM), a flash memory or a similar device or a combination of the above devices. In some embodiments, the memory 130 can be used to store program codes, device configurations, buffer data or permanent data (such as motion sensing data, images, motion sensing result, configurations, etc.), and these data would be introduced later.

The processor 150 is coupled to the memory 130, and the processor 150 is configured to load the program codes stored in the memory 130, to perform a procedure of the exemplary embodiment of the disclosure. In some embodiments, functions of the processor 150 may be implemented by using a programmable unit such as a central processing unit (CPU), a microprocessor, a microcontroller, a digital signal processing (DSP) chip, a field programmable gate array (FPGA), etc. In one embodiment, the functions of the processor 150 may also be implemented by an independent electronic device or an integrated circuit (IC), and operations of the processor 150 may also be implemented by software.

It should be noticed that the processor 150 may or may not be disposed with the motion sensing apparatuses 110 and 120. However, motion sensing apparatuses 110 and 120 and the processor 150 may further include or be connected with communication transceivers with compatible communication technology, such as Bluetooth, Wi-Fi, IR, or physical transmission line, to transmit/ receive data with each other.

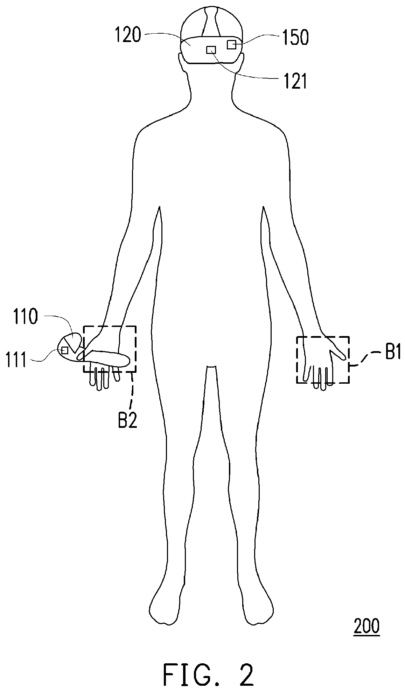

FIG. 2 is a schematic diagram illustrating a behavior-based configuration system 200 according to one of the exemplary embodiments of the disclosure. Referring to FIG. 2, the behavior-based configuration system 200 includes a motion sensing apparatus 110 (which is a handheld controller) and a motion sensing apparatus 120 (which is an HMD). A stereo camera 121 (i.e., the image sensor) and the processor 150 are embedded in the HMD, and the stereo camera 121 may be configured to capture camera images toward the operating portion B1 (i.e. the left hand of the user) and the operating portion B2 (i.e. the right hand of the user). In addition, IMU 111 (i.e., the motion sensor) is embedded in the handheld controller, to obtain the motion sensing result of the operating portion B2.

It should be noted that there would be more motion sensing apparatuses 110 provided in the behavior-based configuration system 100 or 200. For example, the behavior-based configuration system 200 further includes two ankle sensors and a waist belt. However, the number of the motion sensing apparatuses 110 is not limited thereto.

To better understand the operating process provided in one or more embodiments of the disclosure, several embodiments will be exemplified below to elaborate the operating process of the behavior-based configuration system 100. The devices and modules in the behavior-based configuration system 100 are applied in the following embodiments to explain the control method provided herein. Each step of the control method can be adjusted according to actual implementation situations and should not be limited to what is described herein.

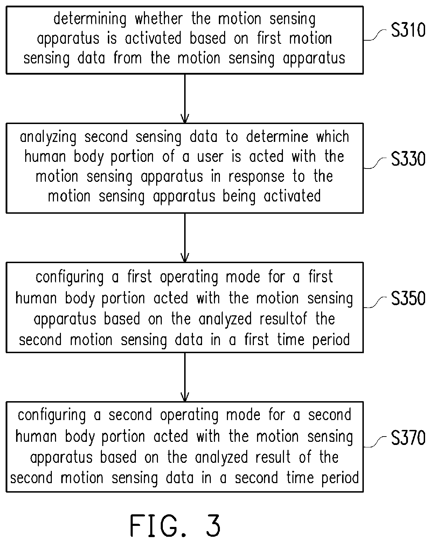

FIG. 3 is a flowchart illustrating a behavior-based configuration method according to one of the exemplary embodiments of the disclosure. Referring to FIG. 3, the processor 150 determines whether the motion sensing apparatus 110 is activated based on first motion sensing data from the motion sensing apparatus 110 (step S310). Specifically, the user may hold, wear, or carry the motion sensing apparatus 110. However, the motion sensing apparatus 110 may also be placed at any place without being acted with the human body portion of the user. The motion sensor of the motion sensing apparatus 110 may sense the motion of a corresponding human body portion of the user, which carries a motion sensing apparatus 110, for a time period, and the processor 150 may generate a sequence of first motion sensing data from the motion sensing result (e.g., sensed strength values, degree, etc.) of the motion sensor at multiple time points within the time period. For one example, the first motion sensing data includes a 3-degree of freedom (3-DoF) data, and the 3-DoF data which are related to the rotation information of the human body portion in three-dimensional (3D) space, such as accelerations in yaw, roll, and pitch. For another example, the first motion sensing data includes a relative position and/or displacement of a human body portion in the 2D/3D space.

In one embodiment, the processor 150 may determine the motion of the motion sensing apparatus 110 based on motion sensing result of the motion sensor to determine the motion sensing apparatus 110 is activated. For example, the processor 150 may check the motion sensing apparatus 110 is not still.

In some embodiments, the variation of the first motion sensing data obtained from the motion sensor of the motion sensing apparatus 110 at different time points may be determined. If the value of the variation between two time points is larger than a predefined threshold, the processor 150 may determine the motion sensing apparatus 110 is moving and activated. On the other hand, the processor 150 may determine the motion sensing apparatus 110 is not activated.

In some embodiments, the processor 150 may compare the displacement and/or rotation situation of the motion sensing apparatus 110 based on the first motion sensing data with one or more predefined trajectories and/or rotations. If the first motion sensing data meets the predefined trajectories and/or rotations, the processor 150 may determine the motion sensing apparatus 110 is activated. On the other hand, the processor 150 may determine the motion sensing apparatus 110 is not activated.

If the the motion sensing apparatus 110 is activated, the processor 150 may analyze the second motion sensing data to determine which human body portion of the user is acted with the motion sensing apparatus 110 (step S330). Specifically, the second motion sensing data is related to the motion of the human body portion. In one embodiment, the second motion sensing data is obtained from the motion sensing apparatus 120, and the processor 150 generates the second motion sensing data based on images captured by the image sensor of the motion sensing apparatus 120. In one embodiment, the processor 150 may detect whether the one or more human body portion is detected in the image. In some embodiments, the human body portion in the image would be identified through a machine learning technology (such as deep learning, artificial neural network (ANN), or support vector machine (SVM), etc.). In another embodiment, the human body portion may be identified through other object identification technologies, such as the binary classifier, the adaptive boosting (Adaboost), etc.

In one embodiment, if the human body portion is detected in the image, the processor 150 may generate the second motion sensing data according to the motion of the human body portion in the image. In some embodiments, the sensing strength and the pixel position corresponding to the human body portion in the image can be used for estimating depth information of the first operating portion (i.e., a distance relative to the motion sensing apparatus 120 or other reference apparatuses) and estimating 2D position of the human body portion at a plane parallel to the motion sensing apparatus 120. The processor 150 can generate a 3D position in a predefined coordinate system according to the distance and the 2D position of the human body portion. The processor 150 may further estimate the displacement and the rotation data of the human body portion according to multiple positions at different time points, so as to generate a 6-degree of freedom (6-DoF) data (which would be considered as second first motion sensing data). In some embodiments, 3-DoF data, a relative position and/or displacement of the human body portion in the 2D/3D space could be the second motion sensing data. In some embodiments, the processor 150 may further identify the gesture of the hand in the image, or identify whether the motion sensing apparatus 110 exists in the image.

In another embodiment, the second motion sensing data is obtained from the motion sensing apparatus 110, and the processor 150 generates the second motion sensing data based on motion sensing result of the motion sensor of the motion sensing apparatus 110. In this embodiment, the generation of the second motion sensing data can be referred to the generatation of the first motion sensing data, and its detailed description would be omitted.

In still another embodiment, the second motion sensing data is obtained from the motion sensing apparatus 110 and the motion sensing apparatus 120, and the processor 150 generates the second motion sensing data based on both motion sensing result of the motion sensor of the motion sensing apparatus 110 and images captured by the image sensor of the motion sensing apparatus 120. For example, the image could be used for estimating the position of the human body portion, and the motion sensing result could be used for estimating the rotation situation of the human body portion. For another example, both the image and the motion sensing result can be used for determining the position of the human body portion. For still another example, the second motion sensing data may record the position and rotation data based on the motion sensing result and the position and rotation data based on the image, respectively.

After the second motion sensing data is generated, the processor 150 may determine whether the second motion sensing data meets a condition to generate the analyzed result. Specifically, the condition is related that the motion of the human body portion detected based on the second motion sensing data. It is assumed that the behavior of the user can be used to estimate which human body portion is carrying/ wearing/holding the motion sensing apparatus 110. For example, when the user holds a handheld controller, the user may lift his arm. For another example, when the user wears ankle sensors, the user may try to walk. On the other hand, the human may have a pair of hands, arms, legs, and feet. Sometimes, the displacement and the rotation may be different for two human body portions in each aforementioned human body portion pair and can be used to estimate which side of the human body portions.

In one embodiment, the condition is related that motion of the human body portion existed in the images obtained from the motion sensing apparatus 120. It is assumed that the user may move the human body portion which carries the motion sensing apparatus 110. In some embodiments, each image may be divided into two or more areas, and the area where the human body portion exists can be used to determine which human body portion is moving. For example, the user raises the right hand, and the right hand may exist on the right side of an image.

In some embodiments, the trajectory of the human body portion in the image can be used to determine which human body portion is moving. For example, the user walks, the knee of the user may move from the bottom to the middle of the image, so as to determine the legs is moving.

In some embodiments, the gesture of the user's hand in the image can be used to determine which human body portion uses the motion sensing apparatus 110. For example, the fingertip of the thumb faces toward the right side in the image, so as determine the hand holds the motion sensing apparatus 110.

In one embodiment, the condition is related that the motion of the human body portion detected in the motion sensing result. In some embodiments, the displacement and the rotation of the human body portion based on the motion sensing result can be used to determine which human body portion is moving. For example, a wave motion is detected, so as to determine the hand performs the wave motion. For another example, the human body portion rotates horizontally, as as to determine the user twists the waist.

In some embodiments, the position of the human body portion based on the motion sensing result can be used to determine which human body portion carries the motion sensing apparatus 110. For example, the human body portion is located in front of the left chest, the processor 150 may estimate the human body portion is the left hand.

In still another embodiment, the condition is related that the motion of the human body portion detected in both the motion sensing result and the images. In some embodiments, the displacement, the position and/or the rotation of the human body portion can be determined based on the combination of the motion sensing result and the images, and the displacement, the position and/or the rotation can be used to estimate which human body portion is moving or wears/carries/holding the motion sensing apparatus 110 as mentioned above.

In some embodiments, the processor 150 may identify the human body portion in the image and determine whether the motion of the human body portion is identical in both the motion sensing result and the images. The displacement, the position and/or the rotation in both motion sensing result and the images may be compared. If the compared result is identical, the processor 150 determines the condition is meet and determine the identified human body portion is acted with the motion sensing apparatus 110. On the other hand, if the compared result is not identical, the processor 150 determines the condition is not meet.

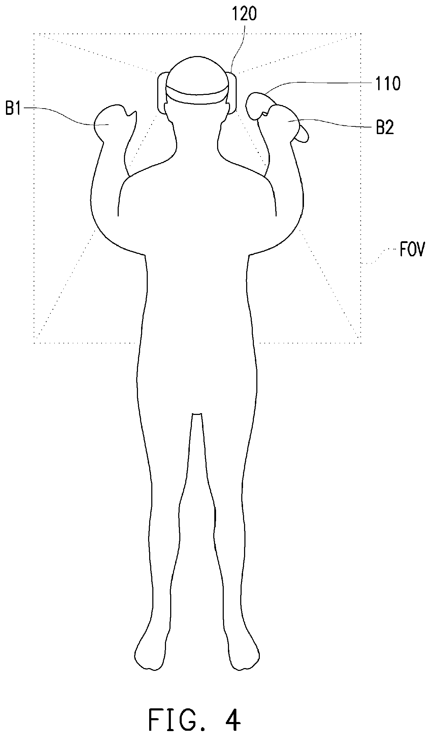

FIG. 4 is a schematic diagram illustrating a motion tracking method according to one of the exemplary embodiments of the disclosure. Referring to FIG. 4, the human body portions Bland B2 exist in the field of view FOV of the image sensor of the motion sensing apparatus 120. However, regarding the human body portion B1, there is no position data based on the motion sensing result obtained from the motion sensing apparatus 120 is identical to the position data based on the image. On the other hand, the position data based on the motion sensing result obtained from the motion sensing apparatus 120 is identical to the position data based on the image for the human body portion B2. Accordingly, the processor 150 may determine the human body portion B2 (i.e., the right hand) holds the motion sensing apparatus 110.

In another embodiment, if the motion sensing apparatus 110 is not activated, the processor 150 may use the third motion sensing data obtained from another motion sensing apparatus (which can be the motion sensing apparatus 120 or other motion sensing apparatuses different from the motion sensing apparatus 110) to sense motion of the human body portion. It is assumed the motion sensing apparatus 110 is not used by the user, so that the motion sensing result obtained from the motion sensing apparatus is not reliable, and another motion sensing data would be need. The third motion sensing data may be generated based on the images or other data.

For example, if a handheld controller is not activated based on the first motion sensing data, the processor 150 may use another motion sensing data from the image sensor of the HMD to determine the motion of the user's hand.

If the human body portion is determined and it is assumed that the determined human body portion is a first human body portion of the user, the processor 150 may configure a first operating mode for the first human body portion acted with the motion sensing apparatus 110 based on the analyzed result of the second motion sensing data in a first time period (step S350). Specifically, the analyzed result is related that the human body portion acted with the motion sensing apparatus 110. The processor 150 may configure a first operating mode of the motion sensing apparatus 110 for the determined human body portion, which is the first human body portion. In one embodiment, the first operating mode is related to the right side or the left side of the human body portion pair. For example, the processor 150 configures the right hand operating mode or the left hand operating mode for the handheld controller. In another embodiment, the first operating mode could be related to a scenario, a command, a motion sensing mechanism, etc. In some embodiments, the first operating mode may be used for the motion sensing apparatus 120 or other external apparatuses. The first time period is a duration when the first operating mode is configured. In some embodiments, the first time period may be ended if the first human body portion is not acted with the motion sensing apparatus 110.

If the human body portion is determined and it is assumed that the determined human body portion is a second human body portion of the user different from the first human body portion, the processor 150 may configure a second operating mode for the second human body portion acted with the motion sensing apparatus 110 based on the analyzed result of the second motion sensing data in a second time period (step S370). Similar to step S350, the processor 150 may configure a second operating mode of the motion sensing apparatus 110 for the determined human body portion, which is the second human body portion. The second operating mode may be the same as or different from the first operating mode. For example, the first operating mode is related to the right side of the human body portion pair, and the second operating mode is related to the left side of the human body portion pair. For another example, the first and second operating modes are both the operating mode for a user interface. In some embodiments, the second operating mode also could be related to a scenario, a command, a motion sensing mechanism, etc, and the second operating mode may be used for the motion sensing apparatus 120 or other external apparatuses. In addition, the second time period is a duration when the second operating mode is configured. In some embodiments, the second time period may be ended if the second human body portion is not acted with the motion sensing apparatus 110. It should be noted that the second time period may be or be not overlapped with the first time period.

In one embodiment, the motion sensing data obtained from the motion sensing apparatus 110 or 120 could be used to control the motion of a corresponding body portion of an avatar. For example, the motion sensing data is related that the left leg is raising in the real world, and the left leg of the avatar may raise accordingly in the virtual world.

In some embodiments, the processor 150 may move a first body portion of an avatar corresponding to the first human body portion of the user in the first operating mode, and move a second body portion of the avatar corresponding to the second human body portion of the user in the second operating mode. The body portion of the avatar could be a hand, a head, left or right ankle, left or right leg, a waist, or other portions. For example, the first body portion and the first human body portion is corresponding to the left hand of the user, and the second body portion and the second human body portion is corresponding to the right hand of the user. Then, the motion information of the left hand of the avatar may be generated according to the motion of the left hand of the user with the left-hand mode of a handheld controller, and the motion information of the right hand of the avatar may be generated according to the motion of the right hand of the user with the right-hand mode of the same handheld controller in different time periods.

Accordingly, the configuration of the motion sensing apparatus 110 can be set automatically based on the detected behavior of the user. For example, when the user holds a handheld controller by the right hand and waves the right hand in the real world, the processor 150 may configure the right hand operating mode for the handheld controller and an avatar of the user may wave its right hand in the virtual world. And then, when the user holds the handheld controller by the left hand and waves the left hand in the real world, the same handheld controller may be switched to the left hand operating mode and the avatar of the user may wave its left hand in the virtual world.

In summary, the exemplary embodiments described above depicted behavior-based configuration method and behavior-based configuration system, which may analyze the motion sensing data to determine the motion of the human body portion, and further determine which human body portion is acted with the motion sensing apparatus. Then, the operating mode for the determined human body portion can be configured. Accordingly, it is convenient for the user to operate with the motion sensing apparatus.

## Claims

1. A behavior-based configuration method, **characterized by** comprising:
determining whether a motion sensing apparatus (110) is activated based on first motion sensing data from the motion sensing apparatus (110);
analyzing second motion sensing data to determine which human body portion (B1, B2) of a user is acted with the motion sensing apparatus (110) in response to the motion sensing apparatus (110) being activated, wherein the second motion sensing data is related to the human body portion (B1, B2) acted with the motion sensing apparatus (110);
configuring a first operating mode for a first human body portion (B1, B2) acted with the motion sensing apparatus (110) based on the analyzed result of the second motion sensing data in a first time period; and
configuring a second operating mode for a second human body portion (B1, B2) acted with the motion sensing apparatus (110) based on the analyzed result of the second motion sensing data in a second time period.

2. A behavior-based configuration system (100, 200), comprising:
a motion sensing apparatus (110); and
a processor (150), **characterized in that** the processor (150) is configured to perform:
determining whether the motion sensing apparatus (110) is activated based on first motion sensing data from the motion sensing apparatus (110);
analyzing second motion sensing data to determine which human body portion (B1, B2) of a user is acted with the motion sensing apparatus (110) in response to the motion sensing apparatus (110) being activated, wherein the second motion sensing data is related to the human body portion (B1, B2) acted with the motion sensing apparatus (110);
configuring a first operating mode for a first human body portion (B1, B2) acted with the motion sensing apparatus (110) based on the analyzed result of the second motion sensing data in a first time period; and
configuring a second operating mode for a second human body portion (B1, B2) acted with the motion sensing apparatus (110) based on the analyzed result of the second motion sensing data in a second time period.

3. The behavior-based configuration method of claim 1, **characterized in that** the step of analyzing second motion sensing data comprises:
determining whether the second motion sensing data meets a condition to generate the analyzed result, wherein the condition is related that motion of the human body portion (B1, B2) detected based on the second motion sensing data, or the behavior-based configuration system (100, 200) of claim 2, **characterized in that** the processor (150) is configured to perform:
determining whether the second motion sensing data meets a condition to generate the analyzed result, wherein the condition is related that motion of the human body portion (B1, B2) detected based on the second motion sensing data.

4. The behavior-based configuration method of claim 3, **characterized in that** the second motion sensing data is obtained from a second motion sensing apparatus (120), the second motion sensing apparatus (120) comprises an image sensor, the second motion sensing data is generated based on images captured by the image sensor, and the condition is related that motion of the human body portion (B1, B2) existed in the images, or the behavior-based configuration system (100, 200) of claim 3, **characterized by** further comprising:
a second motion sensing apparatus (120), wherein the second motion sensing data is obtained from a second motion sensing apparatus (120), the second motion sensing apparatus (120) comprises an image sensor, the second motion sensing data is generated based on images captured by the image sensor, and the condition is related that motion of the human body portion (B1, B2) existed in the images.

5. The behavior-based configuration method of claim 3 or the behavior-based configuration system (100, 200) of claim 3, **characterized in that** the second motion sensing data is obtained from the motion sensing apparatus (110), the motion sensing apparatus (110) comprises a motion sensor, the second motion sensing data is generated based on motion sensing result of the motion sensor, and the condition is related that motion of the human body portion (B1, B2) detected in the motion sensing result.

6. The behavior-based configuration method of claim 3, **characterized in that** the second motion sensing data is obtained from the motion sensing apparatus (110) and a second motion sensing apparatus (120), the motion sensing apparatus (110) comprises a motion sensor, the second motion sensing apparatus (120) comprises an image sensor, the second motion sensing data is generated based on both motion sensing result of the motion sensor and images captured by the image sensor, and the condition is related that motion of the human body portion (B1, B2) detected in both the motion sensing result and the images, or the behavior-based configuration system (100, 200) of claim 3, further comprising:
a second motion sensing apparatus (120), **characterized in that** the second motion sensing data is obtained from the motion sensing apparatus (110) and the second motion sensing apparatus (120), the motion sensing apparatus (110) comprises a motion sensor, the second motion sensing apparatus (120) comprises an image sensor, the second motion sensing data is generated based on both motion sensing result of the motion sensor and images captured by the image sensor, and the condition is related that motion of the human body portion (B1, B2) detected in both the motion sensing result and the images.

7. The behavior-based configuration method of claim 6, **characterized in that** the step of determining whether the second motion sensing data meets the condition comprises:
determining whether the motion of the human body portion (B1, B2) is identical in both the motion sensing result and the images, or the behavior-based configuration system (100, 200) of claim 6, **characterized in that** the processor (150) is configured to perform:
determining whether the motion of the human body portion (B1, B2) is identical in both the motion sensing result and the images.

8. The behavior-based configuration method of claim 1 or the behavior-based configuration system (100, 200) of claim 2, **characterized in that** one of the first human body portion (B1, B2) and the second human body portion (B1, B2) is right hand or left hand of the user.

9. The behavior-based configuration method of claim 1, wherein the motion sensing apparatus (110) comprises a motion sensor, **characterized in that** the step of determining whether the motion sensing apparatus (110) is activated comprises:
determining motion of the motion sensing apparatus (110) based on motion sensing result of the motion sensor to determine the motion sensing apparatus (110) is activated, or the behavior-based configuration system (100, 200) of claim 2, wherein the motion sensing apparatus (110) comprises a motion sensor, **characterized in that** the processor (150) is configured to perform:
determining motion of the motion sensing apparatus (110) based on motion sensing result of the motion sensor to determine the motion sensing apparatus (110) is activated.

10. The behavior-based configuration method of claim 1, **characterized by** further comprising:
using a third motion sensing data obtained from a third motion sensing apparatus to sense motion of the human body portion (B1, B2) in response to the motion sensing apparatus (110) being not activated, or the behavior-based configuration system (100, 200) of claim 2, further comprising:
a third motion sensing apparatus, **characterized in that** the processor (150) is configured to perform:
using a third motion sensing data obtained from the third motion sensing apparatus to sense motion of the human body portion (B1, B2) in response to the motion sensing apparatus (110) being not activated.

11. The behavior-based configuration method of claim 1, **characterized by** further comprising:
moving a first body portion of an avatar corresponding to the first human body portion (B1, B2) of the user in the first operating mode; and
moving a second body portion of the avatar corresponding to the second human body portion (B1, B2) of the user in the second operating mode, or the behavior-based configuration system (100, 200) of claim 2, **characterized in that** the processor (150) is configured to perform:
moving a first body portion of an avatar corresponding to the first human body portion (B1, B2) of the user in the first operating mode; and
moving a second body portion of the avatar corresponding to the second human body portion (B1, B2) of the user in the second operating mode.
